Europäisches Patentamt

European Patent Office

Office européen des brevets

(19)

(11) Publication number: **0 028 464**
**B1**

(12) **EUROPEAN PATENT SPECIFICATION**

(45) Date of publication of patent specification: **25.05.83**

(21) Application number: **80303539.3**

(22) Date of filing: **08.10.80**

(51) Int. Cl.³: **C 09 B 41/00** //C09B29/08, C09B29/40

(54) Azo dyestuff preparation by phase transfer catalysed coupling in a two-phase medium.

(30) Priority: **26.10.79 GB 7937296**

(43) Date of publication of application:
**13.05.81 Bulletin 81/19**

(45) Publication of the grant of the patent:
**25.05.83 Bulletin 83/21**

(84) Designated Contracting States:
**CH DE GB IT LI**

(56) References cited:
CH - A - 397 913
DE - A - 2 313 003
FR - A - 2 207 167
FR - A - 2 339 653
GB - A - 778 806
US - A - 3 897 203

**Principles and Applications of Homogeneous Catalysis (1980), page 182**
**CHEMICAL ABSTRACTS, vol. 85, no. 8, August 23, 1976, page 86, abstract 48261t, Columbus, Ohio, USA**

(73) Proprietor: **IMPERIAL CHEMICAL INDUSTRIES PLC**
**Imperial Chemical House Millbank**
**London SW1P 3JF (GB)**

(72) Inventor: **Ellwood, Michael**
**38 Cottingley Approach**
**Leeds LS11 0NQ (GB)**
Inventor: **Gregory, Peter**
**129 Armadale Road**
**Bolton Lancashire (GB)**
Inventor: **Griffiths, John**
**9 Ashlea Close Garforth**
**Leeds LS25 1JX (GB)**

(74) Representative: **Clark, Peter Frederick et al,**
**Imperial Chemical Industries PLC Legal Department, Patents Thames House North Millbank**
**London SW1P 4QG (GB)**

Courier Press, Leamington Spa, England

Azo dyestuff preparation by phase transfer catalysed coupling in a two-phase medium

This invention relates to azo dyestuff preparation by phase transfer catalysed coupling in a two-phase medium.

Certain coupling components react in the azo coupling reaction only with difficulty even with highly active diazonium compounds under the conventional aqueous reaction conditions.

It has now been found that the rate at which these "difficult" coupling components will react with diazonium compounds in the azo coupling reaction can be greatly increased by conducting the coupling in a two-phase system in the presence of a suitable phase transfer catalyst.

Swiss patent No. 397913 describes the preparation of finely divided azo/pigments by coupling in the presence of water immiscible solvents and dispersing agents such as dodecylbenzene sulphonate. However the process described requires the further addition of known coupling promotors such as alcohols.

According to the present invention there is provided a process for the preparation of azo dyestuffs which comprises reacting together an amino coupling component which is free from ionic water-solubilising groups, and a diazonium compound, in a mixture of water and a water-immiscible polar aprotic solvent and in the presence of a phase transfer catalyst which contains an anionic water-solubilising group.

The coupling components to which the above process is applicable are those which contain an amino group and are so hydrophobic and/or of such low reactivity that they do not react satisfactorily with diazonium compounds under conventional aqueous azo coupling conditions. Attempts to increase the rate of coupling, for example, by raising the reaction temperature, usually result in decomposition of the diazonium compound, and the azo dyestuff, if obtained at all, is usually contaminated with the byproducts of this decomposition.

In using the expression "amino coupling component" we include carbocyclic coupling compounds in which a primary, secondary or tertiary amino group is attached directly to the carbocyclic ring and heterocyclic coupling compounds having a ring nitrogen atom which gives rise to a "$\pi$ excessive" heterocycle, i.e. a heterocycle susceptible to electrophilic substitution.

Examples of coupling components which participate only with difficulty in conventional azo coupling reactions and to which the present process is applicable are N-ethylcarbazole, carbazole, diphenylamine and N-ethyl-N-benzylaniline.

Examples of water-immiscible polar aprotic solvents which may be used in the process are dichloromethane, chloroform and nitrobenzene.

The phase transfer catalysts which may be used in the process are, for example, compounds containing a hydrophobic group and an acidic group, for example, a carboxylic acid or, preferably, a sulphonic acid group which is ionised at the pH of the coupling reaction. Examples of such compounds are alkali metal salts, for example, the potassium and especially the sodium salts, of n-decanoic acid, didodecyl-acetic acid, diisopropylnaphthalene sulphonic acid, 4-dodecylbenzenesulphonic acid and dioctylsulphosuccinic acid. Also very effective, but less preferred because of its high cost compared with the compounds mentioned above, is sodium tetraphenylborate.

The relative proportions of water and water-immiscible polar aprotic solvent which are used in the process are not critical and may be from 9:1 to 1:9 by volume. It is convenient to use approximately equal volumes.

The amount of phase transfer catalyst which is used may be from 0.01 to 0.5, preferably from 0.05 to 0.25, equivalent (based on its anionic group content) with respect to the diazonium compound.

The coupling reaction mixture may also be buffered by the addition of, for example, acetic acid, since an increased yield of the desired azo dyestuff may be obtained in this way.

The reaction temperature is preferably maintained below that at which decomposition of the diazonium compound occurs, and is conveniently 0—5°C. The temperature will in general not exceed 25°C.

The diazonium compound which is used may be derived from any amine A—$NH_2$ in which A is an optionally substituted (including a single carboxylic acid or sulphonic acid substituent) aryl or heterocyclic radical.

As examples of the optionally substituted aryl radicals represented by A there may be mentioned optionally substituted naphthyl radicals and preferably optionally substituted phenyl radicals, in particular phenyl radicals containing one or more substituents such as chlorine, bromine, cyano, trifluoromethyl, nitro, alkyl such as methyl, alkoxy such as methoxy and ethoxy, alkylsulphonyl such as methylsulphonyl, alkylcarbonyl such as acetyl, acylamino such as acetylamino, phthalyl (so as to form an anthraquinone nucleus), alkoxycarbonyl such as methoxycarbonyl and ethoxycarbonyl, and hydroxy- and alkoxy- substituted derivatives thereof such as $\beta$-methoxyethoxy-carbonyl, $\beta$-hydroxyethoxycarbonyl and $\beta$-($\beta'$-ethoxyethoxy)ethoxycarbonyl, aminosulphonyl and N-alkyl, N,N-dialkyl and N-phenyl derivatives thereof such as N-methyl-aminosulphonyl, N,N-diethylaminosulphonyl, N-phenylaminosulphonyl and N-ethyl-N-phenyl-aminosulphonyl, aminocarbonyl and N-alkyl and N,N-dialkyl derivatives thereof such as N-methylaminocarbonyl and N,N-diethylamino-carbonyl, and aminosulphonyloxy and N-alkyl and N,N-dialkyl derivatives thereof.

As examples of optionally substituted heterocyclic radicals represented by A there may be mentioned 2-thienyl, 3-pyrazolyl, 2- or 5-imidazolyl, 3-(1,2,4-triazolyl), 5-(1,2,3,4-tetrazolyl), 2-thiazolyl, 5-isothiazolyl, 5-(1,2,4-thiadiazolyl), 2-(1,3,4-thiadiazolyl), 3-pyridyl, 2-benzoxazolyl, 2-benzthiazolyl, 3-(benz-2,1-isothiazolyl), 3-indazolyl, 3-(thienyl[2,3-b]-pyridine), 3-(isothiazolyl[3,4-d]pyrimidine), 3-(isothiazolyl[3,4-b]thiophene).

The diazotisation of the amine A—NH$_2$ may be carried out by methods conventionally used for this reaction. For example, sodium nitrite optionally in the form of an aqueous solution thereof may be added to a solution or dispersion of the amine A—NH$_2$ in a strong inorganic acid or an aqueous solution thereof, or to a solution of the amine in acetic acid optionally in admixture with propionic acid, or by stirring the amine with nitrosylsulphuric acid. The resulting solution or dispersion of the diazonium compound is then added to a vigorously stirred mixture of water and water-immiscible polar aprotic solvent containing the coupling component and the phase transfer catalyst.

If desired the progress of the reaction can be followed spectrophotometrically at the $\lambda$max of the product, or, in certain cases, at the $\lambda$max of the protonated dye. When reaction is substantially complete the resulting azo dyestuff may be isolated from the reaction mixture, for example, by distilling or steam distilling out the water-immiscible polar aprotic solvent (which may be re-used) and separating the dyestuff from the residual aqueous medium by filtration or other conventional means.

The invention is illustrated by the following Examples.

### Example 1

4-Nitrobenzenediazonium chloride (1.0 m mol) in water (50 ml) at 0°C is added to dichloromethane (50 ml), carbazole (2.0 m mol) and sodium dodecylbenzenesulphonate (0.05 m mol) and the mixture is vigorously agitated at 0°C. The rate of reaction is followed spectrophotometrically and found to be 11.1 × 10⁹/mols⁻¹ dm⁻³. If the catalyst is omitted the rate is only 1.25 × 10⁹/mols⁻¹ dm⁻³.

### Example 2

The procedure described in Example 1 is repeated except that the 2.0 m mol of carbazole are replaced by 2.0 m mol of diphenylamine. The rate of the catalysed reaction is 1830 × 10⁹/mols⁻¹ dm⁻³. If the catalyst is omitted the rate is only 7.5 × 10⁹/mols⁻¹ dm⁻³.

### Example 3

A mixture of 4-nitrobenzenediazonium chloride (1 equivalent) in water, N-ethylcarbazole (2 equivalents) in dichloromethane and sodium 4-dodecylbenzenesulphonate (0.2 equivalent) is agitated vigorously at 0°C. Colour development is rapid and after 48 hours 3-(4'-nitrophenylazo)-N-ethylcarbazole is formed in 44% yield.

Using dioctylsulphosuccinic acid as the phase transfer catalyst increases the yield to 52%.

Attempts to couple 4-nitrobenzenediazonium chloride on to N-ethylcarbazole in water/acetic acid or water/dimethylformamide were unsuccessful. Thus, after 48 hours, by which time all the diazonium ion had decomposed, the reaction mixture contained largely unreacted coupling component and only a small amount of coloured material. Thin layer chromatographic analysis showed the latter to contain a small amount of the expected azo coupling material together with several other components.

### Example 4

p-Nitroaniline (1.38 g) was dissolved in hot concentrated hydrochloric acid (2.5 ml) and ice was added to precipitate the amine. The slurry was cooled to 0°C and a solution of sodium nitrite (0.7 g) in water (5 ml) was added. The mixture was stirred for 30 minutes, filtered and added to a solution of N-ethylcarbazole (2.0 g) and sodium dioctylsulphosuccinate (1.1 g) in methylene chloride (50 ml) at 0°C.

The mixture was stirred and allowed to warm up to room temperature. After 24 hours no diazonium salt was present and the mixture was allowed to separate into two layers. The aqueous layer was discarded and the solvent was removed from the methylene chloride layer in a rotary evaporator. The resulting oil was dissolved in toluene (25 ml) and the solution was purified by chromatography on a column of silica gel. The dyestuff was eluted with toluene, the toluene was removed and the residue was recrystallised from light petroleum (b.pt. 100—120°C) to give a red solid (1.2 g; 35%) m.pt. 129—130°C. A second crystallization gave red crystals of 3 - (4' - nitrophenylazo) - N - ethylcarbazole, m.pt. 168—169°C. C$_{20}$H$_{16}$N$_4$O$_2$ requires C, 69.76; H, 4.65; N, 16.27%. Found C, 69.95; H, 4.90; N, 16.00%. $\lambda$Max. (CH$_2$CL$_2$) 436 nm; $\varepsilon$max. 17,000.

When the dyestuff in the form of an aqueous dispersion is applied to an aromatic polyester textile material a reddish-yellow shade is obtained.

### Examples 5 to 27

The following table illustrates further preparations of dyestuffs according to the process of the invention, using the procedure described in Example 4. Column 1 of the table gives the number of the example, column 2 the diazo component A—NH$_2$, column 3 the coupling component, column 4 the resulting dyestuff, column 5 the yield of dyestuff in % by weight based on the weight of diazo component, column 6 the melting point of the dyestuff, column 7 the $\lambda$max of the dyestuff, column 8 the $\varepsilon$max of the dyestuff on aromatic polyester textile material when applied thereto by conventional methods from an aqueous dispersion of the dyestuff.

Except in the cases of Examples 7 and 18, the diazo component and the coupling component were used in equimolar proportions.

| Example | A — $NH_2$ | Coupling Component | Dyestuff | Yield[a] (%) | m.pt. (°C) | λ max | ε max (× $10^{-3}$) | Shade |
|---|---|---|---|---|---|---|---|---|
| 5 | 4-methyl-aniline | diphenylamine | 4-(4′-methylphenylazo) diphenylamine | 42 | 102—103 | 411 | 27.75 | Yellow |
| 6 | 4-methoxy-aniline | ,, | 4-(4′-methoxyphenylazo) diphenylamine | 54 | 110 | 410 | 31.5 | ,, |
| 7 | 4-methyl-aniline (2 molar proportions) | ,, | 4,4′-bis (4′′-methylphenylazo) diphenylamine | 41 | 207—208 | 460 | 36.5 | Scarlet |
| 8 | 4-nitro-aniline | 3-chloro-diphenylamine | 4-(4′′-nitrophenylazo)-3′-chloro-diphenylamine | 16 | 154—156 | 461 | 30.25 | ,, |
| 9 | ,, | 2-nitro-diphenylamine | 4-(4′′-nitrophenylazo)-2′-nitro-diphenylamine | 30 | 202 | 449 | 21.0 | Orange |
| 10 | ,, | 4-nitro-diphenylamine | 4-(4′′-nitrophenylazo)-4′-nitro-diphenylamine | 60 | 219—221 | 449 | 42.0 | ,, |
| 11 | ,, | 2-carboxy-diphenylamine | 4-(4′′-nitrophenylazo)-2′-carboxy-diphenylamine | 53 | 245—246 | 474 | 29.25 | Scarlet |
| 12 | ,, | triphenylamine | 4-(4′-nitrophenylazo) triphenylamine | 43 | 139—141 | 478 | 28.5 | ,, |
| 13 | ,, | N-methyl-phenylamine | 4-(4′-nitrophenylazo)-N-methyl-diphenylamine | 11 | 160—161 | 471 | 31.87 | ,, |
| 14 | ,, | 2-methoxy-carbonyl-diphenylamine | 4-(4′′-nitrophenylazo)-2′-methoxy-carbonyldiphenylamine | 16 | 188—189 | 443 | 27.0 | Orange |
| 15 | ,, | 3-methyl-diphenylamine | 4-(4′′-nitrophenylazo)-3-methyl-diphenylamine | 74 | 144—145 | 487 | 31.62 | Red |
| 16 | 2-methoxy-4-nitroaniline | triphenylamine | 4-(2′-methoxy-4′-nitrophenylazo)-triphenylamine | 60 | 173—174 | 449 | 13.5 | Orange |

0 028 464

| Example | A — NH$_2$ | Coupling Component | Dyestuff | Yield (%) | m.pt. (°C) | λ max | ε max (× 10$^{-3}$) | Shade |
|---|---|---|---|---|---|---|---|---|
| 17 | 4-nitro-aniline | 3-methoxy-diphenylamine | 4-(4″-nitrophenylazo)-3-methoxy-diphenylamine | 90 | 140—141 | 495 | 33.5 | Red |
| 18 | 4-nitroaniline (2 molar proportions) | diphenylamine | 4-4′-bis(4″-nitrophenylazo)-diphenylamine | 82 | 227—228 | 510 | 55.6 | Bluish-red |
| 19 | 4-nitro-aniline | 3-hydroxy-diphenylamine | 4-(4′-nitrophenylazo)-3-hydroxy-diphenylamine | 100 [b] | | 482 | 27.75 | Red |
| 20 | ,, | N-β-cyanoethyl-N-β-acetoxy-ethylaniline | 4-nitro-4′-(N-β-cyanoethyl-N-β-acetoxyethyl) aminoazobenzene | 72 | 139—140 | — | — | Orange |
| 21 | 4-methoxy-aniline | N-phenyl-thiamorpholine-S,S-dioxide | CH$_3$O⟨ ⟩—N=N—⟨ ⟩—N⟨S, O, O⟩ | 20 | 223 | — | — | Greenish-yellow |
| 22 | 4-nitro-aniline | N-cyclohexyl-N-β-hydroxy-ethylaniline | 4-nitro-4′-(N-cyclohexyl-N-β-hydroxyethyl) aminoazobenzene | 78 | 141—142 | — | — | Red |
| 23 | 2-chloro-4-nitroaniline | carbazole | 3-(4′-nitro-2′-chlorophenylazo)-carbazole | | | | | Orange |
| 24 | 2,6-dichloro-4-nitroaniline | ,, | 3-(4′-nitro-2′,6′-dichlorophenylazo)-carbazole | | | | | ,, |
| 25 | 2-chloro-4-nitroaniline | N-ethyl-carbazole | 3-(4′-nitro-2′-chlorophenylazo)-N-ethylcarbazole | | | | | ,, |
| 26 | 2,6-dichloro-4-nitroaniline | ,, | 3-(4′-nitro-2′,6′-dichlorophenylazo)-N-ethylcarbazole | | | | | ,, |

| Example | A — NH$_2$ | Coupling Component | Dyestuff | Yield (%) | m.pt. (°C) | λ max | $\epsilon$ max (× 10$^{-3}$) | Shade |
|---|---|---|---|---|---|---|---|---|
| 27 | 2,6-dichloro-4-nitroaniline | 4-nitro-diphenylamine | 4-(4''-nitro-2'', 6''-dichlorophenylazo)-4'-nitrodiphenylamine | | | | | Yellow-brown |

Notes:

a — Unless otherwise stated, yields are for pure, recrystallised material, and represent a lower limit.

b — Unpurified material.

In all cases the process showed improved yields over couplings in homogeneous aqueous solution.

0 028 464

## Claims

1. A process for the preparation of azo dyestuffs by reaction between a diazonium compound and an amine coupling component which is free from ionic water-solubilising groups, characterised in that the reaction is carried out in a mixture of water and a water-immiscible polar aprotic solvent and in the presence of a phase transfer catalyst which contains an anionic water-solubilising group.

2. A process as claimed in claim 1 characterised in that the water and the water-immiscible polar aprotic solvent are used in the proportions of 9:1 to 1:9 by volume.

3. A process as claimed in claim 1 characterised in that the water and the water-immiscible polar aprotic solvent are used in approximately equal volumes.

4. A process as claimed in any one of claims 1 to 3 characterised in that the amount of phase transfer catalyst which is used is from 0.01 to 0.5 equivalent, based on its anionic group content, with respect to the diazonium compound.

5. A process as claimed in any one of claims 1 to 3 characterised in that the amount of phase transfer catalyst which is used is from 0.05 to 0.25 equivalent, based on its anionic group content, with respect to the diazonium compound.

## Revendications

1. Procédé de préparation de colorants azoïques par réaction entre un composé de diazonium et un constituant de copulation aminé qui est exempt de radicaux ioniques solubilisant dans l'eau, caractérisé en ce que la réaction est exécutée dans un mélange d'eau et d'un solvant aprotique polaire immiscible à l'eau et en présence d'un catalyseur de transfert de phase qui contient un radical anionique solubilisant dans l'eau.

2. Procédé suivant la revendication 1, caractérisé en ce que l'eau et le solvant aprotique polaire immiscible à l'eau sont utilisés dans les proportions de 9:1 à 1:9 en volume.

3. Procédé suivant la revendication 1, caractérisé en ce que l'eau et le solvant aprotique polaire immiscible à l'eau sont utilisés en volumes approximativement égaux.

4. Procédé suivant l'une quelconque des revendications 1 à 3, caractérisé en ce que la quantité de catalyseur de transfert de phase qui est utilisée est de 0,01 à 0,5 équivalent, sur base de sa teneur en radical anionique, par rapport au composé de diazonium.

5. Procédé suivant l'une quelconque des revendications 1 à 3, caractérisé en ce que la quantité de catalyseur de transfert de phase qui est utilisée est de 0,05 à 0,25 équivalent, sur base de sa teneur en radical anionique, par rapport au composé de diazonium.

## Patentansprüche

1. Verfahren zur Herstellung von Azofarbstoffen durch Umsetzung zwischen einer Diazoniumverbindung und einer Aminkupplungskomponente, die frei von ionischen wasserlöslich machenden Gruppen ist, dadurch gekennzeichnet, daß die Reaktion in einem Gemisch aus Wasser und einem mit Wasser unmischbaren polaren aprotischen Lösungsmittel und in Gegenwart eines Phasentransferkatalysators, der eine anionische wasserlöslich machende Gruppe enthält, ausgeführt wird.

2. Verfahren nach Anspruch 1, dadurch gekennzeichnet, daß das Wasser und das mit Wasser unmischbare polare aprotische Lösungsmittel in Volumenverhältnissen von 9:1 bis 1:9 verwendet werden.

3. Verfahren nach Anspruch 1, dadurch gekennzeichnet, daß das Wasser und das mit Wasser unmischbare polare aprotische Lösungsmittel in annähernd gleichen Volumina verwendet werden.

4. Verfahren nach einem der Ansprüche 1 bis 3, dadurch gekennzeichnet, daß in bezug auf die Diazoniumverbindung der Phasentransferkatalysator in einer Menge von 0,01 bis 0,5 Äquivalent, bezogen auf seinen Gehalt an anionischen Gruppen, verwendet wird.

5. Verfahren nach einem der Ansprüche 1 bis 3, dadurch gekennzeichnet, daß in bezug auf die Diazoniumverbindung der Phasentransferkatalysator in einer Menge von 0,05 bis 0,25 Äquivalent, bezogen auf seinen Gehalt an anionischen Gruppen, verwendet wird.